# EUROPEAN PATENT APPLICATION

(11) **EP 4 790 655 A1**
(43) Date of publication of application: **12.08.2026**
(21) Application number: 24874458.3
(22) Date of filing: 13.09.2024
(51) Int. Cl.: G06V 10/774

(54) **INFORMATION PROCESSING SYSTEM**

(30) Priority: 05.10.2023 JP 2023173897
(71) Applicant: Marketvision Co.,Ltd., Tokyo 102-0075 (JP)
(72) Inventor: SHIN, Dongjoo, Tokyo 102-0075 (JP)
(74) Representative: Betten & Resch
(86) International application number: PCT/JP2024/032991
(87) International publication number: WO 2025/074849

(57) **Abstract**

An object is to provide an information processing system for efficiently collecting learning data used in machine learning such as deep learning.

The information processing system that extracts image data for learning of machine learning from a data group of unlabeled image data, includes: a network processing unit that receives inputs of image data in the data group and query image data, and outputs a feature amount of the input image data from a predetermined layer in an intermediate layer of a machine learning network; and an extraction processing unit that extracts image data to be used as learning data, from image data output based on a reference calculated using the feature amount of the query image data and the feature amount of the image data in the data group.

## Description

### Technical Field

The present invention relates to an information processing system for efficiently collecting learning data used in machine learning such as deep learning.

### Cross-reference to Related Applications

This application claims the benefit of priority based on patent application No. 2023-173897 filed on October 5, 2023. The entire contents of that patent application are then incorporated herein by reference.

### Background Art

Machine learning such as deep learning is a computer system that performs predetermined processing, for example, image classification, using a network learned with learning data. An image classification using a network by machine learning has high classification accuracy, and has been used for various purposes in recent years. In machine learning, particularly deep learning, predetermined output is performed by inputting image data to a learning model (network) in which weighting coefficients between neurons of each layer of a neural network in which an intermediate layer includes a large number of layers are optimized.

On the other hand, it is not normally possible to input unlearned image data as a processing target. Even if unlearned image data is input, it is difficult to determine that the unlearned image is an unlearned target, and the unlearned image is determined as a different classification with significantly poor determination accuracy.

Then, when unlearned image data is set as a processing target, it is necessary to perform machine learning again using learning data. In that case, it is necessary to appropriately collect learning data used for learning, and conventionally, in order to collect the learning data, a human usually selects the learning data by visual observation from a large amount of image data.

Therefore, as systems for collecting learning data, there are Patent Literature 1 and Patent Literature 2 described below.

### Citation List

### Patent Literature

Patent Literature 1: JP 2020-071811 A
Patent Literature 2: JP 2023-104040 A

### Summary of Invention

A collection method of Patent Literature 1 is merely processing indicating how to generate learning data, and image data used for learning data cannot be efficiently collected.

In addition, in a collection method of Patent Literature 2, since learning data is collected using inference processing, appropriate image data cannot be collected unless inference accuracy is high. If appropriate image data cannot be collected, the accuracy of machine learning cannot be improved, and it is not easy to use the method for actual machine learning.

For example, from image data obtained by photographing a display shelf of a store, a product displayed on the display shelf may be recognized using machine learning. In this case, image data of a product as a processing target is learned in advance as learning data, and product recognition processing is executed using the learned network.

Then, in a case where it is desired to recognize a product that has not been recognized conventionally, or a new product, it is necessary to generate a machine learning network by newly learning image data of a product as a new recognition target in the network as learning data. In the case of learning using image data of a product as a new recognition target, it is possible to acquire image data in a clear state (state without noise, such as no reflection of light, shadow, or the like) as a so-called sample, from a manufacturer or the like that sells the product, and use the image data as learning data.

However, when image data in a clean state acquired as a sample is used as learning data, there is a problem that the accuracy of image classification (image recognition) is deteriorated. That is, an input is an image obtained by photographing a display shelf of an actual store, and a product in that state generally includes noise such as light and shadow. Therefore, even if image data in a clear state is used as learning data, there is a limit to improvement in accuracy.

Therefore, it is conceivable to use image data obtained by cutting out a product area from image data obtained by photographing a display shelf of an actual store as learning data, but such image data is not labeled as a matter of course in general. Therefore, image data of a product as a new processing target cannot be searched by product name or the like.

Conventionally, a human visually identifies image data from a large amount of unlabeled image data and uses the image data as learning data, but there is a problem that a work load is significantly large.

Therefore, it is required to efficiently collect desired image data of a product as a new processing target from a large amount of unlabeled image data.

In view of the above problems, an information processing system has been disclosed that efficiently collects image data used for learning data of machine learning from a data group of unlabeled image data.

An information processing system according to one aspect of the present disclosure is an information processing system that extracts image data for learning of machine learning from a data group of unlabeled image data, and the information processing system includes: a network processing unit that receives inputs of image data in the data group and query image data, and outputs a feature amount of the input image data from a predetermined layer in an intermediate layer of a machine learning network; and an extraction processing unit that extracts image data to be used as learning data, from image data output based on a reference calculated using the feature amount of the query image data and the feature amount of the image data in the data group.

By using the above-described information processing system, it is possible to efficiently collect desired image data of a product as a new processing target from a large amount of unlabeled image data.

In the information processing system according to the one aspect described above, the information processing system can be configured to further include a similarity processing unit that calculates similarity by using the feature amount of the query image data and the feature amount of the image data in the data group, in which the extraction processing unit can be configured to receive selection of image data to be used as learning data, from image data output on the basis of the similarity, and extract the selected image data as the learning data.

In the information processing system according to the one aspect described above, the network processing unit can be configured to extract a feature vector of the input image data from the predetermined layer in the intermediate layer of the machine learning network, and the similarity processing unit can be configured to calculate a distance between the feature vector of the query image data and the feature vector of the image data in the data group as the similarity, and sort the image data in the data group using the calculated similarity, and output image data up to a predetermined rank.

Image data sorted and output may include image data that is not a target of machine learning. Therefore, as described in the above disclosure, by sorting the image data in the data group in the order of similarity to the image data as a target of machine learning, it is possible to output the image data based on the similarity. Therefore, it is easy to select image data as a target of machine learning. In particular, in a case where an operator performs selection, it is easy to select image data as a target of machine learning because the image data tends to be displayed together.

In the information processing system according to the one aspect described above, the similarity processing unit can be configured to calculate cosine similarity between the feature vector of the query image data and the feature vector of the image data in the data group as the similarity.

In the above-described information processing system, by using the cosine similarity as a similarity determination calculation method, it is possible to secure a sufficient processing speed and reduce processing time even when there are, for example, hundreds of thousands of pieces of image data as comparison targets, and calculation is performed one by one.

In the information processing system according to the one aspect described above, the information processing system can be configured to further include an image input processing unit that inputs the image data in the data group and the query image data.

In the information processing system according to the one aspect described above, the image input processing unit can be configured to, when the number of pieces of learning data extracted by the extraction processing unit does not satisfy a predetermined condition, further input the extracted learning data to the machine learning network as new query image data, the network processing unit can be configured to receive an input of the new query image data and output a feature amount of the input new query image data from the predetermined layer in the intermediate layer of the machine learning network, and the extraction processing unit can be configured to further extract image data to be used as learning data, from image data output based on a reference calculated using the feature amount of the new query image data and the feature amount of the image data in the data group.

In a case where the data group of unlabeled image data includes only a small amount of image data as a target of machine learning, there is a possibility that a sufficient number of pieces of image data that is a target of machine learning cannot be extracted in a single piece of processing. Therefore, by further inputting the extracted learning data to the network and executing similar processing, it is possible to extract image data as a target of machine learning one after another.

In the information processing system according to the one aspect described above, the predetermined layer can be configured to be a layer one layer before and/or two layers before a last layer in the intermediate layer.

According to an experiment by the discloser of the present disclosure, it has been found that it is possible to extract image data with high accuracy when processing is executed using feature amounts output from these layers.

This can be realized by causing a computer to read and execute an information processing program of the present disclosure. That is, the information processing program causes a computer to function as: a network processing unit that receives inputs of image data in a data group of unlabeled image data and query image data, and outputs a feature amount of the input image data from a predetermined layer in an intermediate layer of a machine learning network; and an extraction processing unit that extracts image data to be used as learning data, from image data output based on a reference calculated using the feature amount of the query image data and the feature amount of the image data in the data group.

### Advantageous Effects of Invention

By using an information processing system of the present disclosure, it is possible to efficiently collect image data used for learning data of machine learning from a data group of unlabeled image data.

### Brief Description of Drawings

Fig. 1 is a diagram schematically illustrating an example of an overall concept of an information processing system of the present disclosure.
Fig. 2 is a block diagram schematically illustrating an example of a configuration of the information processing system of the present disclosure.
Fig. 3 is a block diagram schematically illustrating an example of a hardware configuration of a computer used in the information processing system of the present disclosure.
Fig. 4 is a flowchart illustrating an example of overall processing in the information processing system of the present disclosure.
Fig. 5 is a diagram schematically illustrating an example of a state in which unlearned image data similar to query image data is sorted.
Fig. 6 is a diagram schematically illustrating processing of using selected learning data as new query image data.

### Description of Embodiments

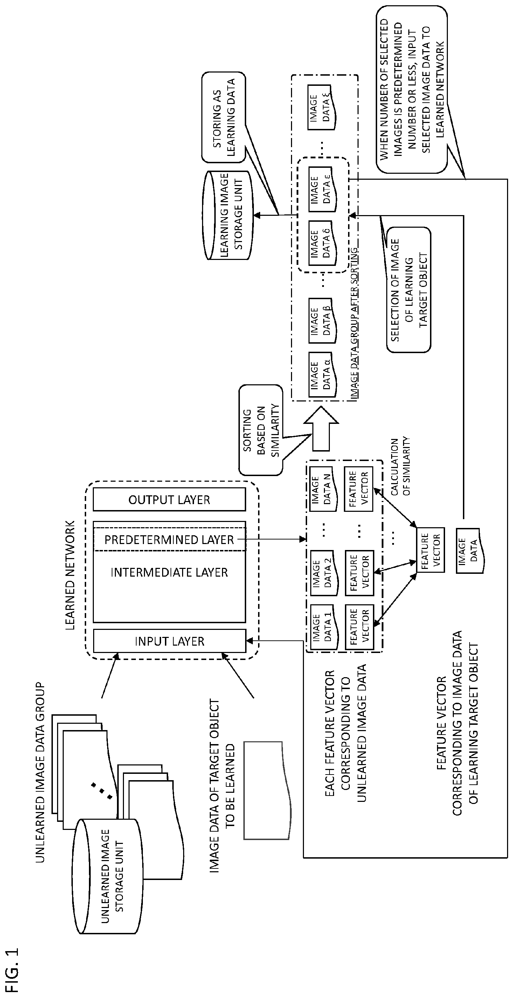

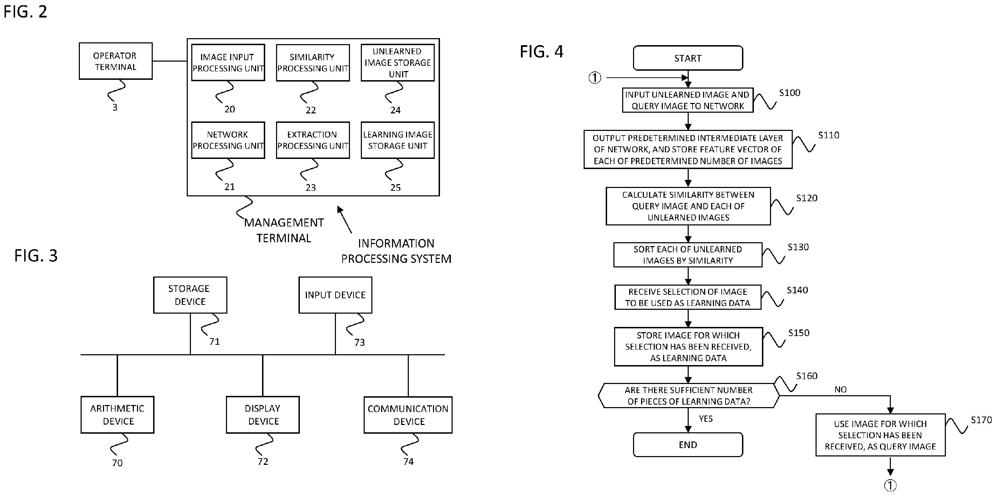

Fig. 1 schematically illustrates an example of an overall concept of an information processing system 1 of the present disclosure. Fig. 2 is a block diagram illustrating an example of an entire processing function of the information processing system 1 of the present disclosure. The information processing system 1 uses a management terminal 2 and an operator terminal 3. The management terminal 2 is a computer used by an organization such as a company that manages the information processing system 1. The operator terminal 3 is a computer operated by an operator.

The management terminal 2 and the operator terminal 3 in the information processing system 1 are realized by using the computers. Fig. 3 schematically illustrates an example of a hardware configuration of the computer. The computer includes an arithmetic device 70 such as a CPU that executes arithmetic processing of a program, a storage device 71 such as a RAM or a hard disk that stores information, a display device 72 such as a display that displays information, an input device 73 such as a keyboard or a mouse that can input information, and a communication device 74 that transmits and receives a processing result of the arithmetic device 70 and information stored in the storage device 71 via a network such as the Internet or a LAN.

In a case where the computer includes a touch panel display, the display device 72 and the input device 73 may be integrally configured. The touch panel display is often used in, for example, a portable communication terminal or the like such as a tablet computer or a smartphone, but is not limited thereto.

The touch panel display is a device in which functions of the display device 72 and the input device 73 are integrated in that an input can be directly performed by a predetermined input device (such as a pen for a touch panel), a finger, or the like on the display.

The operator terminal 3 may include a photographing device such as a camera in addition to the above devices. As the operator terminal 3, a portable communication terminal such as a mobile phone, a smartphone, or a tablet computer can also be used. The operator terminal 3 photographs a predetermined subject and inputs image data (photographed image data) obtained by photographing the subject to the management terminal 2. For example, a display shelf of a store is photographed, and image data (photographed image data) obtained by photographing the display shelf is input to the management terminal 2. In this case, products are displayed on the display shelf, and the display shelf is photographed.

The functions of the respective units in the present disclosure are only logically distinguished, and the respective units may physically or practically form the same region. A processing order of processing in the respective units of the present disclosure can be appropriately changed. Part of the processing may be omitted. For example, correct placement processing to be described later can be omitted. In that case, processing can be executed on image data that has not been subjected to the correct placement processing.

The management terminal 2 of the information processing system 1 includes an image input processing unit 20, a network processing unit 21, a similarity processing unit 22, an extraction processing unit 23, an unlearned image storage unit 24, and a learning image storage unit 25.

The image input processing unit 20 inputs image data to a machine learning network in the network processing unit 21 to be described later. For example, unlearned image data (unlabeled image data) stored in the unlearned image storage unit 24 to be described later is input to the network, and query image data of a target as a learning target of machine learning is input to the network. The query image data is image data of a target object as a learning target of machine learning, and is image data used as image data to be input to the network processing unit 21. The query image data initially input to the network in the network processing unit 21 is often clear image data (sample image data without noise) of a target as a learning target of machine learning, but is not limited thereto. As described later, as the query image data to be input to the network in the network processing unit 21 after the second time, part or all of image data (learning data extracted as learning data) extracted by the extraction processing unit 23 can be used as new query image data.

The network processing unit 21 executes machine learning processing. The image data received from the image input processing unit 20 is input to the network (network for image classification learned in advance) used in the machine learning processing, and the machine learning processing is executed. The network in the network processing unit 21 is a learning model in which weighting coefficients between neurons of each layer of a neural network in which an intermediate layer includes a large number of layers are optimized. The network processing unit 21 executes processing of normal image classification in the network for the received input image data in each of layers, that is, an input layer, an intermediate layer, and an output layer. An output result output from the output layer is not used, and thus discarded.

The network processing unit 21 outputs a processing result of a predetermined layer in the intermediate layer, not the output layer in the network, and stores the processing result as a feature amount of the input image data, for example, a feature vector. As an example, when the learned network used in the network processing unit 21 is mobilenetv2, a result of a layer of a bottleneck residual block that is a layer one layer before and/or two layers before the last layer in the intermediate layer is output, and the result is stored as a feature vector of the input image data. An arbitrary layer can be appropriately selected as the layer in the intermediate layer used for the output, and is not limited to the layer of the bottleneck residual block described above.

This is performed for each piece of unlearned image data, and a feature vector of each piece of unlearned image data is output.

Similarly, the network processing unit 21 inputs the query image data to the network and executes the machine learning processing. Then, the network processing unit 21 executes processing of normal image classification in the network for the received input query image data in each of the layers, that is, the input layer, the intermediate layer, and the output layer, outputs a processing result of the predetermined layer in the intermediate layer, and stores the processing result as a feature vector of the input query image data. An output result output from the output layer is not used, and thus discarded. For example, when the learned network used in the network processing unit 21 is mobilenetv2, a result of the layer of the bottleneck residual block is output, and the result is stored as a feature vector of the query image data.

The similarity processing unit 22 calculates similarity between the query image data and each piece of image data output by the network processing unit 21. As an example of the similarity calculation processing, the similarity processing unit 22 calculates a distance (for example, cosine similarity) between the feature amount (for example, feature vector) of the query image data and the feature amount (for example, feature vector) of the image data output by the network processing unit 21. Then, cosine similarity with the query image data is calculated for each piece of image data, and the image data is sorted in descending order of distance (for example, cosine similarity), and the image data up to a predetermined rank, for example, 300th rank is output. As a result, image data similar to the query image data can be sorted in descending order. Then, the similarity processing unit 22 displays the image data on the display device 72 in the sorted order. Note that it is preferable that the similarity processing unit 22 displays the image data in the sorted order since processing of the extraction processing unit 23 to be described later can be facilitated, but the image data does not necessarily need to be displayed in the sorted order.

The extraction processing unit 23 receives selection of image data to be used as learning data from the image data displayed on the display device 72, extracts the selected image data as learning data, and stores the extracted image data in the learning image storage unit 25 to be described later. Machine learning is performed using the stored image data as learning data. The machine learning may be performed using the network used in the network processing unit 21 or using another network.

The unlearned image storage unit 24 is a storage area for storing unlearned image data.

The learning image storage unit 25 is a storage area that stores image data selected as a learning target of machine learning (learning data used for machine learning), among unlearned image data.

### Example 1

Next, an example of processing of the information processing system 1 according to one aspect of the present disclosure will be described with reference to a flowchart of Fig. 4.

In the network processing unit 21, there is already annotated image data, and processing of performing image classification using the network learned by machine learning is executed. In addition, it is preferable that, when unlearned image data is input to the network as a processing target, the unlearned image data is determined to be unclassified in a case where a certainty factor in an output result output from the network is lower than a predetermined threshold, so that the image data determined to be unclassified is stored in the unlearned image storage unit 24. Unlearned image data, for example, a thousand or more pieces of image data, for example, thousands to tens of thousands of pieces of image data, and hundreds of thousands of pieces of image data, is stored in the unlearned image storage unit 24 in advance, and from the unlearned image data, image data is extracted as learning data used in the machine learning network, and stored in the learning image storage unit 25.

In the following description of the present specification, as the network in the network processing unit 21, a case will be described in which a network that recognizes (performs image classification) product identification information such as a product name or a JAN code in a case where a product subjected to machine learning in advance is shown in image data that is cut out from image data obtained by photographing a display shelf and that is of a product displayed in the display shelf. Furthermore, as a data group of unlearned image data stored in the unlearned image storage unit 24, a case of image data that has not yet been subjected to machine learning in the network, among image data that is cut out from image data obtained by photographing a display shelf and that is of a product displayed in the display shelf will be described. For example, image data of a product that is not a target of image classification is given as an example. Examples of image data of a target object as a learning target include image data of a learning target object to be newly subjected to machine learning, for example, image data of a new product. Therefore, an object of processing of the information processing system 1 of the present disclosure is to extract image data of the same product as a product as a learning target, from a data group of image data of unlearned products stored in the unlearned image storage unit 24, and store the extracted image data in the learning image storage unit 25.

Note that the present specification is not limited to the cases of the above-described examples, and any network or target object may be used as long as the network performs some image classifications and image data of a target object as a learning target object is extracted as learning data from a data group of unlearned image data using the network, and there is no limitation.

An image input reception processing unit inputs each piece of image data (unlearned image data) of various products stored in the unlearned image storage unit 24 to the network in the network processing unit 21 (S100). Further, an input of query image data of a product as a learning target object is received and the query image data is input to the network in the network processing unit 21 (S100).

The network processing unit 21 executes processing in the machine learning network for each piece of received image data of various products and the received query image data that are input from the image input reception processing unit. Then, a processing result of the predetermined layer in the intermediate layer of the network is output as a feature vector of each piece of input image data. That is, the feature vector of each piece of unlearned image data and the feature vector of the query image data in the predetermined layer in the intermediate layer of the network are output (S110).

Then, the similarity processing unit 22 calculates a distance between the feature vector of the query image data and the feature vector of each piece of unlearned image data as similarity between the pieces of image data (S120). For example, cosine similarity between the feature vector of the query image data and the feature vector of the unlearned image data is calculated. The distance is calculated between the query image data and each piece of unlearned image data.

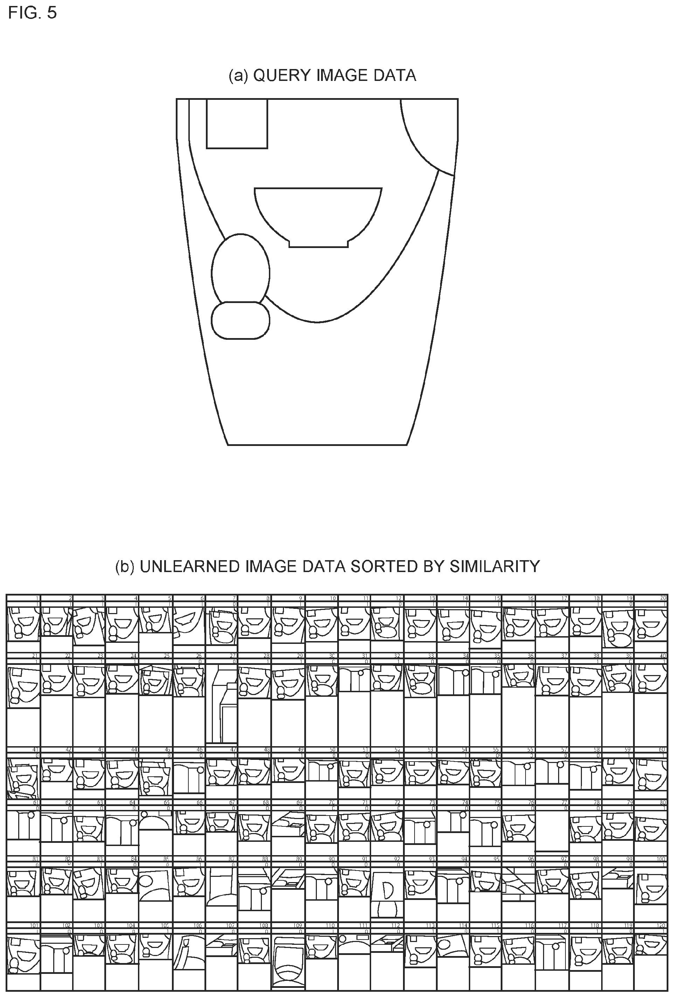

When calculating the similarity between the query image data and each piece of unlearned image data, the similarity processing unit 22 sorts the unlearned image data in descending order of the similarity, and outputs the unlearned image data up to a predetermined rank, for example, 300th rank, to the display device 72 of the operator terminal 3 (S130). That is, in this state, the unlearned image data is displayed in descending order of similarity to the query image data. An example of this state is schematically illustrated in Fig. 5. Fig. 5(a) illustrates an example of query image data of a target object of a learning target, that is, a new product desired to be subjected to machine learning, and Fig. 5(b) illustrates an example of unlearned image data sorted by similarity.

Then, the operator selects image data in which the target object as the learning target, that is the new product desired to be subjected to machine learning in this example, is shown, among the unlearned image data displayed on the display device 72. At this time, in order to improve the accuracy of machine learning, various image data of the same target object may be selected. For example, image data having various orientations, shades, and the like of the product may be selected.

When this selection is received by a selection reception processing unit (S140), the image data for which the selection has been received is stored in the learning image storage unit 25 as learning data (S150).

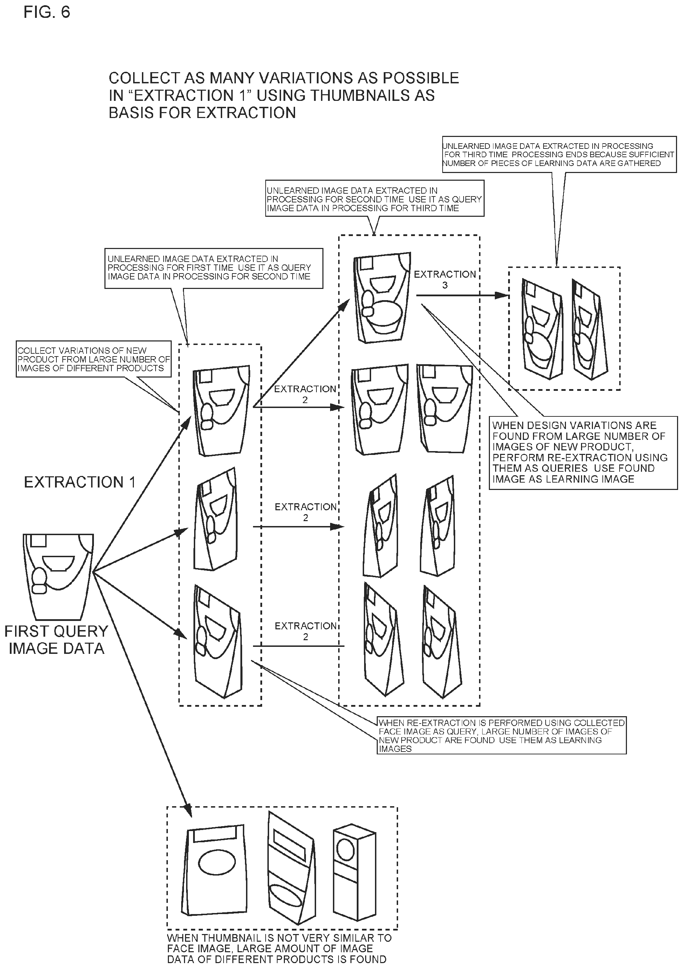

Then, in a case where there are not a sufficient number of pieces of learning data for machine learning (S160), part or all of the image data for which the selection has been received in S140 (image data selected as learning data from unlearned image data) is input to the network in the network processing unit 21 as new query image data, and the processing in and after S100 is executed again (S170). That is, the processing of S100 to S170 is repeated until image data of a sufficient number of pieces of learning data is obtained for machine learning. Fig. 6 schematically illustrates this processing.

By executing the processing as described above, it is possible to extract image data of a target object desired to be a learning target, from a large amount of unlearned image data, and store the extracted image data in the learning image storage unit 25 as learning data.

Note that, in addition to storing the extracted learning data in the learning image storage unit 25, the extracted unlearned image data may be made recognizable as learning data by adding a flag indicating the learning data to the extracted unlearned image data.

The learning data extracted and stored in this manner can be used for additional learning in the network, transfer learning in another network, or the like.

### Industrial Applicability

By using an information processing system 1 of the present disclosure, it is possible to efficiently collect image data used for learning data of machine learning from a data group of unlabeled image data.

### Reference Signs List

- 1: information processing system
- 2: management terminal
- 3: operator terminal
- 20: image input processing unit
- 21: network processing unit
- 22: similarity processing unit
- 23: extraction processing unit
- 24: unlearned image storage unit
- 25: learning image storage unit
- 70: arithmetic device
- 71: storage device
- 72: display device
- 73: input device
- 74: communication device

## Claims

1. An information processing system that extracts image data for learning of machine learning from a data group of unlabeled image data,
the information processing system comprising:
a network processing unit that receives inputs of image data in the data group and query image data, and outputs a feature amount of the input image data from a predetermined layer in an intermediate layer of a machine learning network; and
an extraction processing unit that extracts image data to be used as learning data, from image data output based on a reference calculated using the feature amount of the query image data and the feature amount of the image data in the data group.

2. The information processing system according to claim 1, further comprising
a similarity processing unit that calculates similarity by using the feature amount of the query image data and the feature amount of the image data in the data group, wherein
the extraction processing unit
receives selection of image data to be used as learning data, from image data output on the basis of the similarity, and extracts the selected image data as the learning data.

3. The information processing system according to claim 2, wherein
the network processing unit
extracts a feature vector of the input image data from the predetermined layer in the intermediate layer of the machine learning network, and
the similarity processing unit
calculates a distance between the feature vector of the query image data and the feature vector of the image data in the data group as the similarity, and
sorts the image data in the data group using the calculated similarity, and outputs image data up to a predetermined rank.

4. The information processing system according to claim 3, wherein
the similarity processing unit
calculates cosine similarity between the feature vector of the query image data and the feature vector of the image data in the data group as the similarity.

5. The information processing system according to claim 1, further comprising
an image input processing unit that inputs the image data in the data group and the query image data.

6. The information processing system according to claim 5, wherein
the image input processing unit,
when the number of pieces of learning data extracted by the extraction processing unit does not satisfy a predetermined condition, further inputs the extracted learning data to the machine learning network as new query image data,
the network processing unit
receives an input of the new query image data and outputs a feature amount of the input new query image data from the predetermined layer in the intermediate layer of the machine learning network, and
the extraction processing unit
further extracts image data to be used as learning data, from image data output based on a reference calculated using the feature amount of the new query image data and the feature amount of the image data in the data group.

7. The information processing system according to any one of claims 1 to 6, wherein
the predetermined layer
is a layer one layer before and/or two layers before a last layer in the intermediate layer.

8. An information processing program causing a computer to function as:
a network processing unit that receives inputs of image data in a data group of unlabeled image data and query image data, and outputs a feature amount of the input image data from a predetermined layer in an intermediate layer of a machine learning network; and
an extraction processing unit that extracts image data to be used as learning data, from image data output based on a reference calculated using the feature amount of the query image data and the feature amount of the image data in the data group.
